# EUROPÄISCHE PATENTSCHRIFT

(11) **EP 2 941 814 B1**
(45) Veröffentlichungstag und Bekanntmachung des Hinweises auf die Patenterteilung: **14.12.2016**
(21) Anmeldenummer: 13704781.7
(22) Anmeldetag: 15.02.2013
(51) Int. Cl.: H02K 1/14, H02K 1/18

(54) **ELEKTRISCHE MASCHINE MIT SEGMENTIERTEM STATOR UND ZWEISCHICHTWICKLUNG**
ELECTRICAL MACHINE WITH SEGMENTED STATOR AND TWO-LAYER WINDING
MACHINE ELECTRIQUE D'UN STATOR SECTORIELLE AVEC UN BOBINAGE À DEUX COUCHES

(43) Veröffentlichungstag der Anmeldung: 11.11.2015
(73) Patentinhaber: Siemens Aktiengesellschaft, 80333 München (DE)
(72) Erfinder: BRASAS, Frank, 84103 Postau (DE); BRENNER, Robin, 94036 Passau (DE); SCHÖNBAUER, Norbert, 94072 Bad Füssing (DE); TERINGL, Claus, 94094 Rotthalmünster (DE)
(86) Internationale Anmeldenummer: PCT/EP2013/053094
(87) Internationale Veröffentlichungsnummer: WO 2014/124687

(56) Entgegenhaltungen:
- US-A1- 2006 071 114
- US-A1- 2010 066 199

## Beschreibung

Die vorliegende Erfindung betrifft eine elektrische Maschine,
- wobei die elektrische Maschine einen Stator und einen Läufer aufweist,
- wobei der Läufer relativ zum Stator in einer Bewegungsrichtung bewegbar ist,
- wobei der Stator in der Bewegungsrichtung des Läufers gesehen in aneinander angrenzende Statorsegmente unterteilt ist,
- wobei die Statorsegmente jeweils einen Mittelbereich, einen ersten Übergangsbereich und einen zweiten Übergangsbereich aufweisen,
- wobei die Mittelbereiche in der Bewegungsrichtung des Läufers gesehen zwischen dem ersten Übergangsbereich und dem zweiten Übergangsbereich des jeweiligen Statorsegments angeordnet sind,
- wobei die Statorsegmente an ihrer vom Läufer abgewandten Seite jeweils ein Statorjoch aufweisen, das sich über den jeweiligen Mittelbereich und den jeweiligen ersten Übergangsbereich erstreckt,
- wobei sich ausgehend von den Statorjochen im jeweiligen Mittelbereich mittlere Nutstege und im jeweiligen ersten Übergangsbereich erste Übergangsstege auf den Läufer zu erstrecken,
- wobei die mittleren Nutstege und die ersten Übergangsstege jeweils Nuten bilden, die vom Statorjoch aus gesehen auf den Läufer zu offen sind und in Bewegungsrichtung des Läufers gesehen seitlich jeweils von zwei mittleren Nutstegen, von zwei ersten Übergangsstegen oder von dem an den ersten Übergangsbereich angrenzenden mittleren Nutsteg und dem an den Mittelbereich angrenzenden ersten Übergangssteg begrenzt sind,
- wobei die Statorsegmente an ihrer vom Läufer abgewandten Seite im jeweiligen zweiten Übergangsbereich jeweils einen Quersteg aufweisen,
- wobei sich ausgehend vom jeweiligen Quersteg im jeweiligen zweiten Übergangsbereich jeweilige zweite Übergangsstege auf den Läufer zu erstrecken,
- wobei die zweiten Übergangsstege jeweils Nuten bilden, die vom Statorjoch aus gesehen auf den Läufer zu offen sind und in Bewegungsrichtung des Läufers gesehen seitlich jeweils von zwei zweiten Übergangsstegen begrenzt sind,
- wobei die zweiten Übergangsstege in Richtung auf den Läufer zu gesehen auf der gleichen Höhe wie die mittleren Nutstege enden,
- wobei in Richtung auf den Läufer zu gesehen Unterkanten der Statorjoche vom Läufer einen Jochabstand aufweisen.

Elektrische Maschinen weisen einen Stator auf, der seinerseits ein Statorjoch aufweist, von dem ausgehend sich Stege in Richtung auf den Läufer zu erstrecken. Unmittelbar benachbarte Stege bilden zwischen sich jeweils eine Statornut. In den Statornuten ist das Statorwicklungssystem der elektrischen Maschine angeordnet.

Im einfachsten Fall ist in jeder Statornut eine Wicklungshälfte einer einzigen Wicklung des Statorwicklungssystems angeordnet. Die andere Hälfte der jeweiligen Wicklung verläuft in einer anderen Statornut, wobei in dieser Nut keine Wicklungshälfte einer anderen Wicklung des Statorwicklungssystems angeordnet ist. Ein derartiges Statorwicklungssystem wird im Stand der Technik üblicherweise als Einschichtwicklung bezeichnet.

Alternativ ist es möglich, dass in jeder Statornut die Wicklungshälften von zwei Wicklungen des Statorwicklungssystems angeordnet sind. Die andere Wicklungshälfte der einen Wicklung und die andere Wicklungshälfte der anderen Wicklung sind in zwei anderen Statornuten angeordnet, wobei die erstgenannte Statornut zwischen den beiden anderen Statornuten angeordnet ist. Ein derartiges Statorwicklungssystem wird im Stand der Technik üblicherweise als Zweischichtwicklung bezeichnet. Eine Zweischichtwicklung weist gegenüber einer Einschichtwicklung elektromagnetische Vorteile auf und ist daher im Regelfall vorzuziehen.

Sofern der Stator (in Bewegungsrichtung des Läufers gesehen) ein einheitliches Teil ist, ist es problemlos möglich, den Stator mit einer Zweischichtwicklung zu bewickeln. Bei größeren elektrischen Maschinen bietet es jedoch sowohl fertigungstechnische als auch transporttechnische als auch lagerungstechnische Vorteile, wenn der Stator aus mehreren Segmenten (Statorsegmenten) besteht. Bei einer derartigen Ausgestaltung des Stators ist eine Zweischichtwicklung nicht ohne weiteres zu realisieren.

Im Stand der Technik ist bekannt, die Statorsegmente mit einer Einschichtwicklung zu versehen, beispielsweise einer Einschichtwicklung, wie sie aus der EP 2 166 644 A1 bekannt ist. Diese Lösung ist zwar ohne weiteres realisierbar, es werden jedoch die elektromagnetischen Nachteile in Kauf genommen, die mit einer Einschichtwicklung verbunden sind.

Eine elektrische Maschine der eingangs genannten Art ist beispielsweise aus der US 7 772 738 B2 bekannt. Bei der elektrischen Maschine der US 7 772 738 B2 stellt der Quersteg eine Fortsetzung des Statorjochs dar. Die mittleren Nutstege, die ersten Übergangsstege und die zweiten Übergangsstege sind gleich ausgebildet. Die Statorsegmente grenzen Stoß an Stoß aneinander an.

Aus der US 7 772 738 B2 ist zwar bekannt, in den von den Stegen der Statorsegmente gebildeten Nuten eine Zweischichtwicklung anzuordnen, die Statorsegmente also mit einer Zweischichtwicklung zu versehen. Die Zweischichtwicklung der US 7 772 738 B2 ist jedoch unvollständig. Insbesondere sind zwar zwischen je zwei mittleren Nutstegen eine von zwei Wicklungshälften einer ersten Wicklung und eine von zwei Wicklungshälften einer zweiten Wicklung angeordnet. In den Übergangsbereichen hingegen ist jeweils nur die zweite Wicklungshälfte einer ersten Wicklung oder die zweite Wicklungshälfte einer zweiten Wicklung angeordnet. In den Übergangsbereichen ist die Zweischichtwicklung daher unvollständig. Bei der US 7 772 738 B2 wird versucht, die sich ergebende nachteilige elektromagnetische Wirkung dadurch zu kompensieren, dass das Statorjoch und der Quersteg in den an die benachbarten Statorsegmente angrenzenden Bereichen eine größere Stärke als dazwischen aufweisen. Die Kompensation ist jedoch nur unvollständig.

Es ist theoretisch denkbar, die unvollständige Zweischichtwicklung der US 7 772 738 B2 nachträglich zu vervollständigen. In diesem Fall würden zwar die elektromagnetischen Nachteile behoben werden. Es ist jedoch schwierig bis nahezu unmöglich, die Qualität der nachträglich hergestellten Wicklungen auf hohem Niveau zu gewährleisten. Es muss vielmehr damit gerechnet werden, dass die Betriebssicherheit (Zuverlässigkeit) der elektrischen Maschine deutlich reduziert ist.

Aus der US 2010/0066199 A1 ist eine elektrische Maschine bekannt, wobei die elektrische Maschine einen Stator und einen Läufer aufweist, wobei der Läufer relativ zum Stator in einer Bewegungsrichtung bewegbar ist. Der Stator ist in der Bewegungsrichtung des Läufers gesehen in aneinander angrenzende Statorsegmente unterteilt. Die Statorsegmente weisen jeweils einen Mittelbereich, einen ersten Übergangsbereich und einen zweiten Übergangsbereich auf, wobei die Mittelbereiche in der Bewegungsrichtung des Läufers gesehen zwischen dem ersten Übergangsbereich und dem zweiten Übergangsbereich des jeweiligen Statorsegments angeordnet sind. Die Statorsegmente weisen jeweils ein Statorjoch auf, das sich über den jeweiligen Mittelbereich und den jeweiligen ersten Übergangsbereich erstreckt. Im jeweiligen Mittelbereich der Statorjoche erstreckt sich jeweils ein Statorzahn auf den Läufer zu. Die Statorsegmente weisen an ihrer vom Läufer abgewandten Seite im jeweiligen zweiten Übergangsbereich jeweils einen Quersteg auf. In Richtung auf den Läufer zugesehen weisen Unterkanten der Statorjoche vom Läufer einen Jochabstand auf. Die ersten und zweiten Übergangsbereiche unmittelbar aneinander angrenzender Statorsegmente überlappen in Bewegungsrichtung des Läufers gesehen einander und sind vom Stator auf den Läufer zugesehen übereinander angeordnet.

Der US 2006/0071114 A1 ist ein ähnlicher Offenbarungsgehalt zu entnehmen.

Die Aufgabe der vorliegenden Erfindung besteht darin, eine elektrische Maschine zu schaffen, die mit einer qualitativ hochwertigen Zweischichtwicklung versehen werden kann, obwohl der Stator in der Bewegungsrichtung des Läufers gesehen in aneinander angrenzende Statorsegmente unterteilt ist.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 10.

Erfindungsgemäß wird eine elektrische Maschine der eingangs genannten Art dadurch modifiziert,
- dass die ersten Übergangsstege in Richtung auf den Läufer zu gesehen unterhalb der mittleren Nutstege enden,
- dass in Richtung auf den Läufer zu gesehen ein Abstand der ersten Übergangsstege vom Läufer mindestens so groß wie ein Abstand einer vom Läufer abgewandten Unterkante der Querstege ist und
- dass der erste Übergangsbereich und der zweite Übergangsbereich unmittelbar aneinander angrenzender Statorsegmente in Bewegungsrichtung des Läufers gesehen einander überlappen und vom Stator auf den Läufer zu gesehen übereinander angeordnet sind.

Durch diese Ausgestaltung der elektrischen Maschine - insbesondere der Statorsegmente - können die Statorsegmente vorab, das heißt vor dem Zusammensetzen der Statorsegmente zum Stator, vollständig mit der Zweischichtwicklung versehen werden. Die Zweischichtwicklung kann also werkseitig in die Statorsegmente eingebracht werden. Ein nachträgliches Einbringen von Wicklungen in den Übergangsbereichen, das erst nach dem Zusammensetzen der Statorsegmente am Betriebsort der elektrischen Maschine erfolgen müsste, ist nicht erforderlich.

Für den Aufbau der Statorsegmente sind verschiedene Ausgestaltungen möglich. Beispielsweise ist es möglich, dass die Statorsegmente in Bewegungsrichtung des Läufers gesehen einteilig ausgebildet sind. Alternativ ist es möglich,
- dass die Statorsegmente in Bewegungsrichtung des Läufers gesehen jeweils ein erstes Statorsegmentteil und ein zweites Statorsegmentteil aufweisen,
- dass das jeweilige erste Statorsegmentteil den Mittelbereich und den ersten Übergangsbereich des jeweiligen Statorsegments umfasst,
- dass das jeweilige zweite Statorsegmentteil den zweiten Übergangsbereich des jeweiligen Statorsegments umfasst und
- dass das jeweilige erste Statorsegmentteil und das jeweilige zweite Statorsegmentteil miteinander verbunden sind.

Im letztgenannten Fall können das jeweilige erste Statorsegmentteil und das jeweilige zweite Statorsegmentteil beispielsweise mittels einer Nut-Feder-Verbindung miteinander verbunden sein. Alternativ ist beispielsweise eine Verschraubung möglich.

Die Zweischichtwicklung kann insbesondere dadurch realisiert sein,
- dass zwischen je zwei mittleren Nutstegen eine von zwei Wicklungshälften einer ersten Wicklung und eine von zwei Wicklungshälften einer zweiten Wicklung angeordnet sind,
- dass die andere Wicklungshälfte der ersten Wicklung zwischen zwei mittleren Nutstegen, zwischen dem an den ersten Übergangsbereich des jeweiligen Statorsegments angrenzenden mittleren Nutsteg und dem an den Mittelbereich des jeweiligen Statorsegments angrenzenden ersten Übergangssteg oder zwischen zwei ersten Übergangsstegen des jeweiligen Statorsegments angeordnet ist,
- dass die andere Wicklungshälfte der zweiten Wicklung zwischen zwei mittleren Nutstegen, zwischen dem an den zweiten Übergangsbereich des jeweiligen Statorsegments angrenzenden mittleren Nutsteg und dem an den Mittelbereich des jeweiligen Statorsegments angrenzenden zweiten Übergangssteg oder zwischen zwei zweiten Übergangsstegen des jeweiligen Statorsegments angeordnet ist,
- dass zwischen je zwei ersten Übergangsstegen ausschließlich die andere Wicklungshälfte einer ersten Wicklung, aber keine Wicklungshälfte einer zweiten Wicklung angeordnet ist und
- dass zwischen je zwei zweiten Übergangsstegen ausschließlich die andere Wicklungshälfte einer zweiten Wicklung, aber keine Wicklungshälfte einer ersten Wicklung angeordnet ist.

Vorzugsweise sind die ersten Wicklungen untereinander gleich aufgebaut. Weiterhin sind vorzugsweise die zweiten Wicklungen untereinander gleich aufgebaut. Von ganz besonderem Vorteil ist eine Ausgestaltung, bei der alle Wicklungen gleich aufgebaut sind.

Es ist möglich, dass die Statorsegmente Bestandteile einer elektrischen Linearmaschine sind. In der Regel (rotatorische elektrische Maschine) sind die Statorsegmente jedoch kreisförmig um eine Rotationsachse gebogen, wobei die Bewegungsrichtung des Läufers tangential zur Rotationsachse verläuft und die Richtung vom Stator zum Läufer radial zur Rotationsachse verläuft.

Die elektrische Maschine kann prinzipiell zu beliebigen Zwecken verwendet werden. Vorzugsweise wird sie als Generator einer Windkraftanlage verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine im Längsschnitt,
- FIG 2: die elektrische Maschine von FIG 1 im Schnitt längs einer Linie II-II in FIG 1,
- FIG 3: ein Statorsegment in einer perspektivischen Ansicht,
- FIG 4: das Statorsegment von FIG 3 in einer Seitenansicht,
- FIG 5: Teile zweier aneinander angrenzender Statorsegmente,
- FIG 6: ein Statorsegment mit Wicklungen einer Phase von der Seite in abgerollter Darstellung,
- FIG 7: einen Teil eines Mittelbereichs und eines ersten Übergangsbereichs eines Statorsegments mit einer Wicklung,
- FIG 8: ein Statorsegment mit Wicklungen in einer perspektivischen Ansicht,
- FIG 9: ein Statorsegment mit Wicklungen von der Seite,
- FIG 10: einen Teil eines Mittelbereichs und einen zweiten Übergangsbereich eines Statorsegments und
- FIG 11: Teile zweier aneinander angrenzender Statorsegmente.

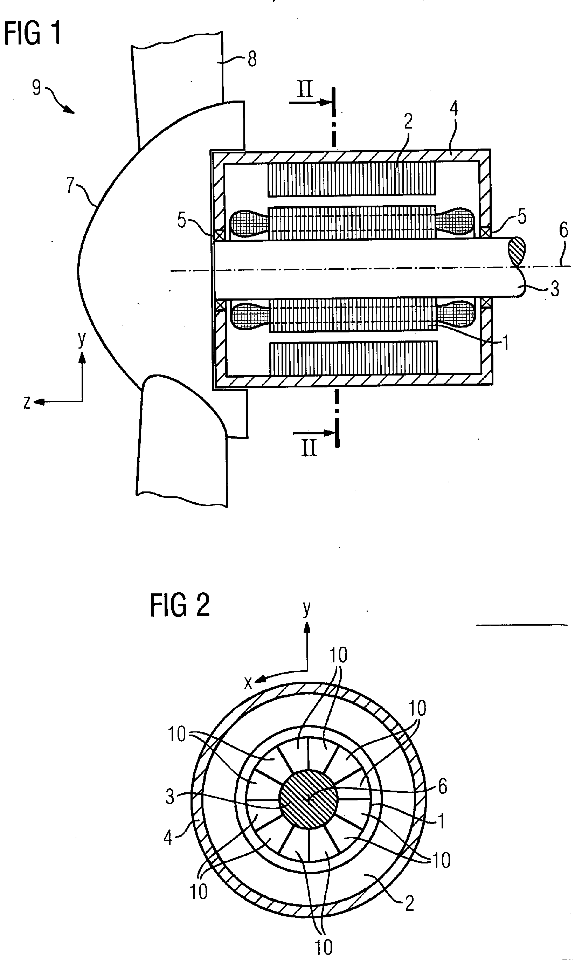

Gemäß den FIG 1 und 2 weist eine elektrische Maschine einen Stator 1 und einen Läufer 2 auf. Der Stator 1 ist auf einem Statorträger 3 befestigt. Der Läufer 2 ist auf einem Läuferträger 4 befestigt. Der Läuferträger 4 und mit ihm der Läufer 2 ist relativ zum Stator 1 in einer Bewegungsrichtung x bewegbar. Gemäß den FIG 1 und 2 ist der Läufer 2 in Lagern 5 gelagert und dadurch um eine Rotationsachse 6 rotierbar. Die elektrische Maschine ist also als rotatorische elektrische Maschine aufgebaut. Die Bewegungsrichtung x des Läufers 2 verläuft dadurch tangential zur Rotationsachse 6. Eine Richtung y vom Stator 1 auf den Läufer 2 zu verläuft radial zur Rotationsachse 6. Weiterhin wird für eine Erstreckungsrichtung der Rotationsachse 6 nachfolgend, soweit erforderlich, dass Bezugszeichen z verwendet.

Gemäß den FIG 1 und 2 ist - bezogen auf die Rotationsachse 6 - der Stator 1 radial innen angeordnet, der Läufer 2 radial außen. Die elektrische Maschine der FIG 1 und 2 ist somit als Außenläufermaschine ausgebildet. In Verbindung mit einer Außenläufermaschine wird nachfolgend die vorliegende Erfindung näher erläutert. Die vorliegende Erfindung ist jedoch ebenso bei einer Innenläufermaschine anwendbar.

Gemäß den FIG 1 und 2 ist auf dem Läuferträger 4 eine Nabe 7 befestigt. Die Nabe 7 trägt Rotorblätter 8 eines Windrades 9. Die elektrische Maschine wird daher als Generator einer Windkraftanlage verwendet. Prinzipiell könnte die elektrische Maschine jedoch auch zu anderen Zwecken verwendet werden.

Gemäß FIG 2 ist der Stator 1 in der Bewegungsrichtung x des Läufers 2 gesehen in aneinander angrenzende Statorsegmente 10 unterteilt. Die Statorsegmente 10 sind, da die elektrische Maschine als rotatorische elektrische Maschine ausgebildet ist, kreisförmig um die Rotationsachse 6 gebogen. Falls die vorliegende Erfindung bei einer elektrischen Linearmaschine angewendet werden würde, wären die Statorsegment 10 gerade.

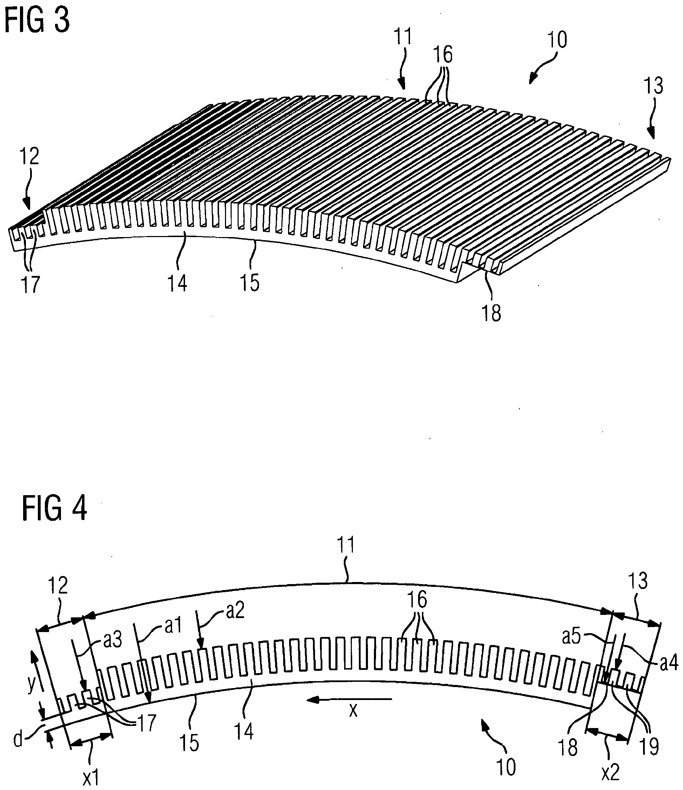

Die Statorsegmente 10 sind untereinander vorzugsweise gleich aufgebaut. Nachfolgend wird daher - stellvertretend für alle Statorsegmente 10 - in Verbindung mit den FIG 3 und 4 der Aufbau eines einzelnen Statorsegments 10 näher erläutert. Die entsprechenden Ausführungen sind jedoch für alle Statorsegmente 10 gültig.

Das Statorsegment 10 weist gemäß den FIG 3 und 4 einen Mittelbereich 11, einen ersten Übergangsbereich 12 und einen zweiten Übergangsbereich 13 auf. Der Mittelbereich 11 ist in der Bewegungsrichtung x des Läufers 2 gesehen zwischen dem ersten Übergangsbereich 12 und dem zweiten Übergangsbereich 13 angeordnet.

Das Statorsegment 10 weist an seiner vom Läufer 2 abgewandten Seite ein Statorjoch 14 auf. Das Statorjoch 14 erstreckt sich über den Mittelbereich 11 und den ersten Übergangsbereich 12. Es weist in der Regel eine einheitliche Dicke d auf. Eine Unterkante 15 des Statorjochs 14 weist daher in Richtung auf den Läufer 2 zu gesehen vom Läufer 2 einen Abstand a1 auf, der als Funktion der Position in Bewegungsrichtung x des Läufers gesehen konstant ist. Der Abstand a1 wird nachfolgend als Jochabstand bezeichnet

Ausgehend vom Statorjoch 14 erstrecken sich im Mittelbereich 11 mittlere Nutstege 16 auf den Läufer 2 zu. Weiterhin erstrecken sich im ersten Übergangsbereich 12 erste Übergangsstege 17 auf den Läufer 2 zu. Die mittleren Nutstege 16 weisen in Richtung auf den Läufer 2 zu gesehen vom Läufer 2 einen Abstand a2 auf. Der Abstand a2 ist für die mittleren Nutstege 16 einheitlich derselbe. Die ersten Übergangsstege 17 weisen in Richtung auf den Läufer 2 zu gesehen vom Läufer 2 einen Abstand a3 auf. Der Abstand a3 ist für die ersten Übergangsstege 17 einheitlich derselbe. Er ist jedoch größer als der Abstand a2 der mittleren Nutstege 16. Die ersten Übergangsstege 17 enden somit in Richtung auf den Läufer 2 zu gesehen unterhalb der mittleren Nutstege 16.

Das Statorsegment 10 weist weiterhin an seiner vom Läufer 2 abgewandten Seite im zweiten Übergangsbereich 13 einen Quersteg 18 auf. Ausgehend vom Quersteg 18 erstrecken sich im zweiten Übergangsbereich 13 zweite Übergangsstege 19 auf den Läufer 2 zu. Die zweiten Übergangsstege 19 weisen in Richtung auf den Läufer 2 zu gesehen vom Läufer 2 einen Abstand a4 auf. Der Abstand a4 der zweiten Übergangsstege 19 ist gleich dem Abstand a2 der mittleren Nutstege 16. Die zweiten Übergangsstege 19 enden somit in Richtung auf den Läufer 2 zu gesehen auf der gleichen Höhe wie die mittleren Nutstege 16.

Der Quersteg 18 muss nur in geringem Umfang einen magnetischen Fluss führen. Auch wird der Quersteg 18 nur in geringem Umfang mechanisch belastet. Eine Dicke des Quersteges 18 kann daher relativ gering sein.

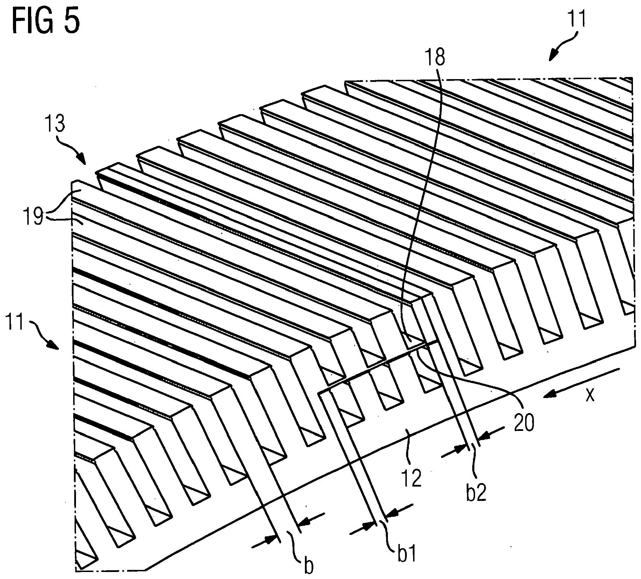

Die vom Läufer 2 abgewandte Unterkante 20 des Quersteges 18 weist gemäß FIG 5 in Richtung auf den Läufer 2 zu gesehen vom Läufer 2 einen Abstand a5 auf. Der Abstand a5 ist höchstens so groß wie der Abstand a3 der ersten Übergangsstege 17 vom Läufer 2. Anders ausgedrückt: In Richtung auf den Läufer 2 zu gesehen ist der Abstand a3 der ersten Übergangsstege 17 vom Läufer 2 mindestens so groß (vorzugsweise genau so groß) wie der Abstand a5 der Unterkante 20 des Quersteges 18 vom Läufer 2.

Der erste Übergangsbereich 12 und der zweite Übergangsbereich 13 weisen weiterhin in Bewegungsrichtung x des Läufers 2 gesehen gleiche Längserstreckungen x1, x2 auf. Im montierten Zustand, wenn also die Statorsegmente 10 aneinander angrenzen, überlappen daher gemäß FIG 5 in Bewegungsrichtung x des Läufers 2 gesehen der erste Übergangsbereich 12 und der zweite Übergangsbereich 13 unmittelbar aneinander angrenzender Statorsegmente 10 einander. Weiterhin sind gemäß FIG 5 vom Stator 1 auf den Läufer 2 zu gesehen der erste Übergangsbereich 12 und der zweite Übergangsbereich 13 unmittelbar aneinander angrenzender Statorsegmente 10 übereinander angeordnet. Aus FIG 5 ist auch ersichtlich, dass die äußersten Übergangsstege 17, 19 des ersten und des zweiten Übergangsbereichs 12, 13 Stegbreiten b1, b2 aufweisen, die in etwa die Hälfte einer Stegbreite b der mittleren Nutstege 16 ist.

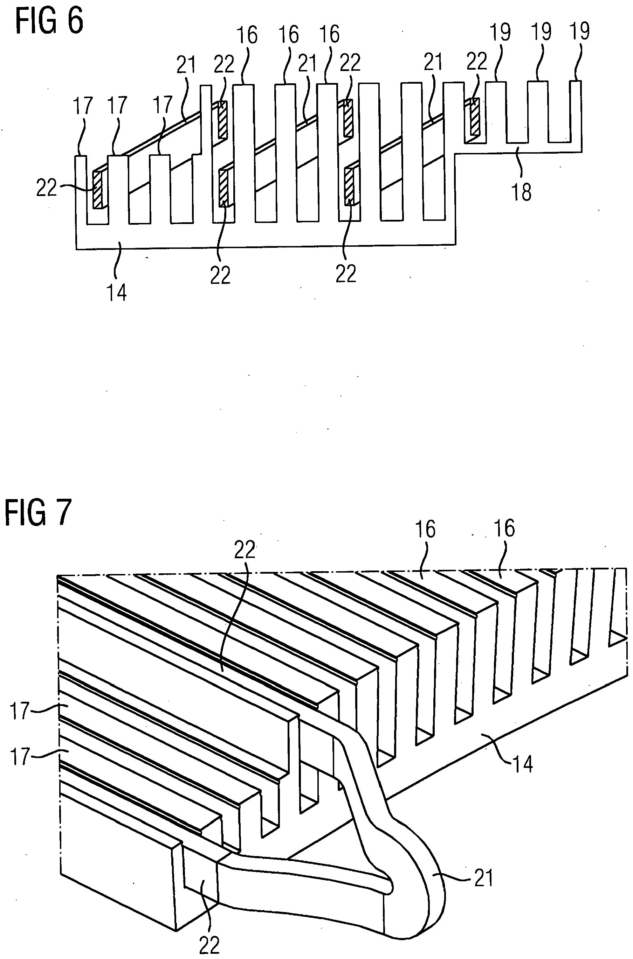

FIG 6 zeigt schematisch für eine einzelne von mehreren Phasen die Anordnung von Wicklungen 21 zwischen den mittleren Nutstegen 16, den ersten Übergangsstegen 17 und den zweiten Übergangsstegen 19. Gemäß FIG 6 sind zwischen je zwei mittleren Nutstegen 16 zwei Wicklungshälften 22 von zwei verschiedenen Wicklungen 21 angeordnet. Bei der einen Wicklung 21 ist die andere Wicklungshälfte 22 der entsprechenden Wicklung 21 entweder zwischen zwei mittleren Nutstegen 16, zwischen dem an den ersten Übergangsbereich 12 angrenzenden mittleren Nutsteg 16 und dem an den Mittelbereich 11 angrenzenden ersten Übergangssteg 17 oder zwischen zwei ersten Übergangsstegen 17 angeordnet. In jedem Fall aber ist die andere Wicklungshälfte 22 der entsprechenden Wicklung 21 "links" angeordnet. Bei der anderen Wicklung 21 ist die andere Wicklungshälfte 22 der entsprechenden Wicklung 21 entweder zwischen zwei mittleren Nutstegen 16, zwischen dem an den zweiten Übergangsbereich 13 angrenzenden mittleren Nutsteg 16 und dem an den Mittelbereich 11 angrenzenden zweiten Übergangssteg 19 oder zwischen zwei zweiten Übergangsstegen 19 angeordnet. In jedem Fall aber ist die andere Wicklungshälfte 22 der entsprechenden Wicklung 21 "rechts" angeordnet. Zwischen je zwei ersten Übergangsstegen 17 und je zwei zweiten Übergangsstegen 19 hingegen ist ausschließlich eine einzige Wicklungshälfte 22 angeordnet. Zwischen je zwei ersten Übergangsstegen 17 ist also zwar eine Wicklungshälfte 22 einer Wicklung 21 angeordnet, wobei die andere Wicklungshälfte 22 dieser Wicklung 21 zwischen zwei mittleren Nutstegen 16 angeordnet ist. Zwischen je zwei ersten Übergangsstegen 17 ist hingegen keine weitere Wicklungshälfte angeordnet. In analoger Weise ist zwischen zwei zweiten Übergangsstegen 19 zwar eine Wicklungshälfte 22 einer Wicklung 21 angeordnet, wobei die andere Wicklungshälfte 22 dieser Wicklung 21 zwischen zwei mittleren Nutstegen 16 angeordnet ist. Zwischen je zwei zweiten Übergangsstegen 19 ist hingegen keine weitere Wicklungshälfte angeordnet.

Bezogen auf ein einzelnes Paar von mittleren Nutstegen 16 sind die beiden zwischen diesen beiden mittleren Nutstegen 16 angeordneten Wicklungshälften 22 übereinander angeordnet. Je eine dieser beiden Wicklungshälften 22 ist also näher am Statorjoch 14 ("unten") und näher am Läufer 2 ("oben") angeordnet. Nachfolgend wird zunächst diejenige Wicklung 21 betrachtet, bei welcher die Wicklungshälfte 22 in dem betrachteten Paar von mittleren Nutstegen 16 unten angeordnet ist. Es ist möglich, dass die andere Wicklungshälfte 22 dieser Wicklung 21 ebenfalls unten angeordnet ist, also entweder zwischen zwei anderen mittleren Nutstegen 16 die dort untere Wicklungshälfte 22 ist oder zwischen zwei ersten Übergangsstegen 17 angeordnet ist. In diesem Fall sind vorzugsweise die "unten" angeordneten Wicklungen 21 untereinander gleich aufgebaut.

Nunmehr wird diejenige Wicklung 21 betrachtet, bei welcher die Wicklungshälfte 22 in dem betrachteten Paar von mittleren Nutstegen 16 oben angeordnet ist. Es ist in analoger Weise möglich, dass die andere Wicklungshälfte 22 dieser Wicklung 21 ebenfalls oben angeordnet ist, also entweder zwischen zwei anderen mittleren Nutstegen 16 die dort obere Wicklungshälfte 22 ist oder zwischen zwei zweiten Übergangsstegen 19 angeordnet ist. Ebenso sind in diesem Fall vorzugsweise die "oben" angeordneten Wicklungen 21 untereinander gleich aufgebaut.

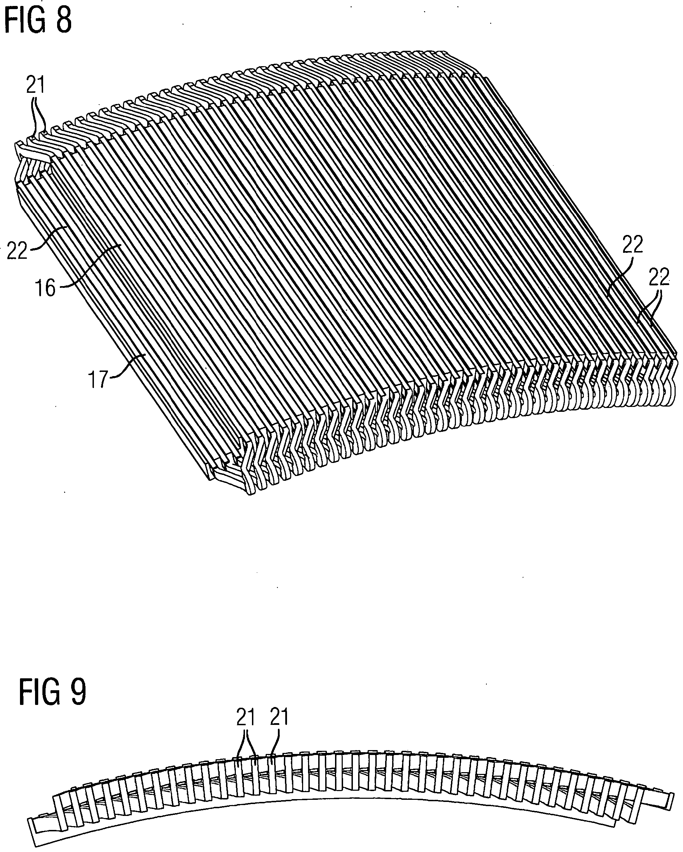

Vorzugsweise sind die beiden Wicklungshälften 22 einer Wicklung 21 jedoch jeweils einmal oben und einmal unten angeordnet. Dies ist in FIG 6 und - für eine einzelne Wicklung 21 - in FIG 7 dargestellt. In diesem Fall können alle Wicklungen 21 einheitlich aufgebaut sein. FIG 8 und FIG 9 zeigen ein entsprechendes, vollständig mit Wicklungen 21 versehenes Statorsegment 10.

Aus der Anordnung von je zwei Wicklungshälften 22 zwischen je zwei mittleren Nutstegen 16 und je einer Wicklungshälfte 22 zwischen je zwei ersten und zweiten Übergangsstegen 17, 19 ergeben sich erforderliche Bereichsbreiten des Mittelbereichs 11, des ersten Übergangsbereichs 12 und des zweiten Übergangsbereichs 13. Insbesondere müssen die ersten Übergangsstege 17 des ersten Übergangsbereichs 12 und die zweiten Übergangsstege 19 des zweiten Übergangsbereichs 13 jeweils m+1 Nuten bilden, wobei m die Anzahl an Nuten ist, die von einer bestimmten Wicklung 21 übersprungen werden. Die mittleren Nutstege 16 müssen ein ganzzahliges Vielfaches von m+1 Nuten bilden.

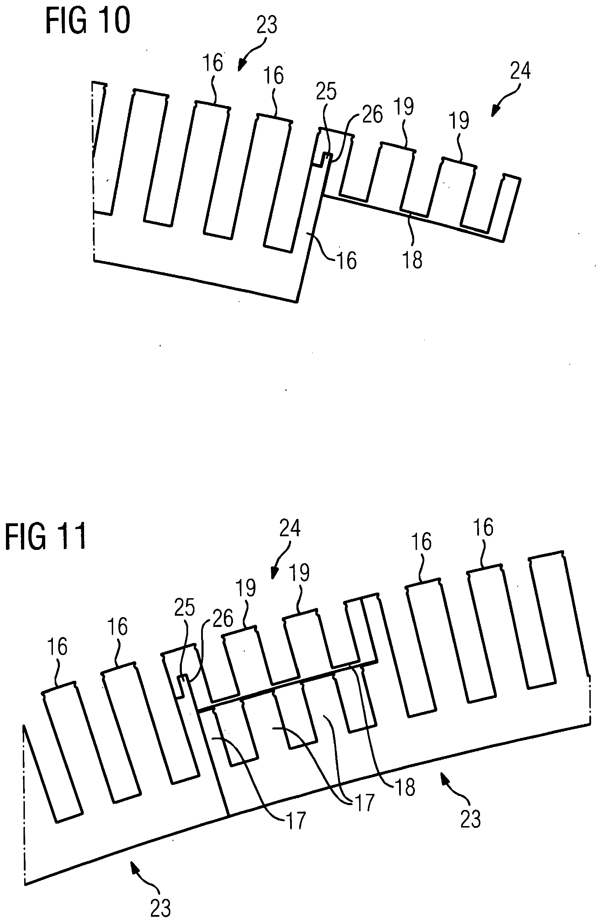

Bei der obenstehend in Verbindung mit den FIG 3 bis 9 erläuterten Ausgestaltung der Statorsegmente 10 sind die Statorsegmente 10 in Bewegungsrichtung x des Läufers 2 gesehen (Blechzuschnitt) einteilig ausgebildet. Dies ist jedoch nicht zwingend. Nachstehend wird in Verbindung mit den FIG 10 und 11 eine weitere Ausgestaltung der Statorsegmente 10 erläutert, bei welcher die Statorsegmente 10 in Bewegungsrichtung x des Läufers 2 gesehen jeweils ein erstes Statorsegmentteil 23 und ein zweites Statorsegmentteil 24 aufweisen. Die Aufteilung der Statorsegmente 10 in das erste Statorsegmentteil 23 und das zweite Statorsegmentteil 24 stellt den wesentlichen Unterschied dar. Die Ausführungen, die obenstehend in Verbindung mit den FIG 3 bis 9 getroffen sind, sind also - mit Ausnahme der Einteiligkeit - in analoger Weise auch auf die Ausgestaltung gemäß den FIG 10 und 11 anwendbar.

Gemäß den FIG 10 und 11 umfasst das zweite Statorsegmentteil 24 den zweiten Übergangsbereich 13. Das erste Statorsegmentteil 23 umfasst den übrigen Teil des Statorsegments 10, also den Mittelbereich 11 und den ersten Übergangsbereich 12. Das erste Statorsegmentteil 23 und das jeweilige zweite Statorsegmentteil 24 sind - selbstverständlich - miteinander verbunden. Beispielsweise kann der an den zweiten Übergangsbereich 13 angrenzende mittlere Nutsteg 16 an seinem dem Läufer 2 zugewandten Ende einen Vorsprung 25 aufweisen. Der Vorsprung 25 wirkt in diesem Fall mit einer entsprechenden Ausnehmung 26 zusammen, die in den an den Mittelbereich 11 angrenzenden zweiten Übergangssteg 19 eingebracht ist. Der Vorsprung 25 und die Ausnehmung 26 bilden eine Nut-Feder-Verbindung, mittels derer das erste Statorsegmentteil 23 und das zweite Statorsegmentteil 24 miteinander verbunden sind.

Die erfindungsgemäße elektrische Maschine weist gegenüber anderen elektrischen Maschinen, bei welchen der Stator 1 aus Statorsegmenten 10 aufgebaut ist, erhebliche Vorteile auf. Insbesondere kann auf relativ einfache Weise eine elektrische Maschine mit einer vollständigen Zweischichtwicklung realisiert werden, ohne die Zuverlässigkeit und Betriebssicherheit der elektrischen Maschine negativ zu beeinflussen. Durch die gleiche Ausbildung der Wicklungen 21 können kürzere Ausladungen realisiert werden, wodurch wiederum elektrische Verluste minimiert werden können. Weiterhin weisen die Wicklungen 21 (zumindest im wesentlichen) gleiche elektrische Widerstände auf. Weiterhin können sogenannte Schlingströme deutlich reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die nachfolgenden Patentansprüche festgelegt wird.

## Patentansprüche

1. Elektrische Maschine,
- wobei die elektrische Maschine einen Stator (1) und einen Läufer (2) aufweist,
- wobei der Läufer (2) relativ zum Stator (1) in einer Bewegungsrichtung (x) bewegbar ist,
- wobei der Stator (1) in der Bewegungsrichtung (x) des Läufers (2) gesehen in aneinander angrenzende Statorsegmente (10) unterteilt ist,
- wobei die Statorsegmente (10) jeweils einen Mittelbereich (11), einen ersten Übergangsbereich (12) und einen zweiten Übergangsbereich (13) aufweisen,
- wobei die Mittelbereiche (11) in der Bewegungsrichtung (x) des Läufers (2) gesehen zwischen dem ersten Übergangsbereich (12) und dem zweiten Übergangsbereich (13) des jeweiligen Statorsegments (10) angeordnet sind,
- wobei die Statorsegmente (10) an ihrer vom Läufer (2) abgewandten Seite jeweils ein Statorjoch (14) aufweisen, das sich über den jeweiligen Mittelbereich (11) und den jeweiligen ersten Übergangsbereich (12) erstreckt,
- wobei sich ausgehend von den Statorjochen (14) im jeweiligen Mittelbereich (11) mittlere Nutstege (16) und im jeweiligen ersten Übergangsbereich (12) erste Übergangsstege (17) auf den Läufer (2) zu erstrecken,
- wobei die ersten Übergangsstege (17) in Richtung auf den Läufer (2) zu gesehen unterhalb der mittleren Nutstege (16) enden,
- wobei die mittleren Nutstege (16) und die ersten Übergangsstege (17) jeweils Nuten bilden, die vom Statorjoch (14) aus gesehen auf den Läufer (2) zu offen sind und in Bewegungsrichtung (x) des Läufers (2) gesehen seitlich jeweils von zwei mittleren Nutstegen (16), von zwei ersten Übergangsstegen (17) oder von dem an den ersten Übergangsbereich (12) angrenzenden mittleren Nutsteg (16) und dem an den Mittelbereich (11) angrenzenden ersten Übergangssteg (17) begrenzt sind,
- wobei die Statorsegmente (10) an ihrer vom Läufer (2) abgewandten Seite im jeweiligen zweiten Übergangsbereich (13) jeweils einen Quersteg (18) aufweisen,
- wobei sich ausgehend vom jeweiligen Quersteg (18) im jeweiligen zweiten Übergangsbereich (13) jeweilige zweite Übergangsstege (19) auf den Läufer (2) zu erstrecken,
- wobei die zweiten Übergangsstege (19) jeweils Nuten bilden, die vom Statorjoch (14) aus gesehen auf den Läufer (2) zu offen sind und in Bewegungsrichtung (x) des Läufers (2) gesehen seitlich jeweils von zwei zweiten Übergangsstegen (19) begrenzt sind,
- wobei die zweiten Übergangsstege (19) in Richtung auf den Läufer (2) zu gesehen auf der gleichen Höhe wie die mittleren Nutstege (16) enden,
- wobei in Richtung auf den Läufer (2) zu gesehen Unterkanten (15) der Statorjoche (14) vom Läufer (2) einen Jochabstand (a1) aufweisen,
- wobei in Richtung auf den Läufer (2) zu gesehen ein Abstand (a3) der ersten Übergangsstege (17) vom Läufer (2) mindestens so groß wie ein Abstand (a5) einer vom Läufer (2) abgewandten Unterkante (20) der Querstege (18) ist und
- wobei der erste Übergangsbereich (12) und der zweite Übergangsbereich (13) unmittelbar aneinander angrenzender Statorsegmente (10) in Bewegungsrichtung (x) des Läufers (2) gesehen einander überlappen und vom Stator (1) auf den Läufer (2) zu gesehen übereinander angeordnet sind.

2. Elektrische Maschine nach Anspruch 1, **dadurch gekennzeichnet, dass** die Statorsegmente (10) in Bewegungsrichtung (x) des Läufers (2) gesehen einteilig ausgebildet sind.

3. Elektrische Maschine nach Anspruch 1, **dadurch gekennzeichnet,**
- **dass** die Statorsegmente (10) in Bewegungsrichtung (x) des Läufers (2) gesehen jeweils ein erstes Statorsegmentteil (23) und ein zweites Statorsegmentteil (24) aufweisen,
- **dass** das jeweilige erste Statorsegmentteil (23) den Mittelbereich (11) und den ersten Übergangsbereich (12) des jeweiligen Statorsegments (10) umfasst,
- **dass** das jeweilige zweite Statorsegmentteil (24) den zweiten Übergangsbereich (13) des jeweiligen Statorsegments (10) umfasst und
- **dass** das jeweilige erste Statorsegmentteil (23) und das jeweilige zweite Statorsegmentteil (24) miteinander verbunden sind.

4. Elektrische Maschine nach Anspruch 3, **dadurch gekennzeichnet, dass** das jeweilige erste Statorsegmentteil (23) und das jeweilige zweite Statorsegmentteil (24) mittels einer Nut-Feder-Verbindung miteinander verbunden sind.

5. Elektrische Maschine nach einem der obigen Ansprüche, **dadurch gekennzeichnet,**
- **dass** zwischen je zwei mittleren Nutstegen (16) eine von zwei Wicklungshälften (22) einer ersten Wicklung (21) und eine von zwei Wicklungshälften (22) einer zweiten Wicklung (21) angeordnet sind,
- **dass** die andere Wicklungshälfte (22) der ersten Wicklung (21) zwischen zwei mittleren Nutstegen (16), zwischen dem an den ersten Übergangsbereich (12) des jeweiligen Statorsegments (10) angrenzenden mittleren Nutsteg (16) und dem an den Mittelbereich (11) des jeweiligen Statorsegments (10) angrenzenden ersten Übergangssteg (17) oder zwischen zwei ersten Übergangsstegen (17) des jeweiligen Statorsegments (10) angeordnet ist,
- **dass** die andere Wicklungshälfte (22) der zweiten Wicklung (21) zwischen zwei mittleren Nutstegen (16), zwischen dem an den zweiten Übergangsbereich (13) des jeweiligen Statorsegments (10) angrenzenden mittleren Nutsteg (16) und dem an den Mittelbereich (11) des jeweiligen Statorsegments (10) angrenzenden zweiten Übergangssteg (19) oder zwischen zwei zweiten Übergangsstegen (19) des jeweiligen Statorsegments (10) angeordnet ist,
- **dass** zwischen je zwei ersten Übergangsstegen (17) ausschließlich die andere Wicklungshälfte (22) einer ersten Wicklung (21), aber keine Wicklungshälfte (22) einer zweiten Wicklung (21) angeordnet ist und
- **dass** zwischen je zwei zweiten Übergangsstegen (19) ausschließlich die andere Wicklungshälfte (22) einer zweiten Wicklung (21), aber keine Wicklungshälfte (22) einer ersten Wicklung (21) angeordnet ist.

6. Elektrische Maschine nach Anspruch 5, **dadurch gekennzeichnet, dass** die ersten Wicklungen (21) untereinander gleich aufgebaut sind.

7. Elektrische Maschine nach Anspruch 5 oder 6, **dadurch gekennzeichnet, dass** die zweiten Wicklungen (21) untereinander gleich aufgebaut sind.

8. Elektrische Maschine nach Anspruch 5, **dadurch gekennzeichnet, dass** alle Wicklungen (21) gleich aufgebaut sind.

9. Elektrische Maschine nach einem der obigen Ansprüche, **dadurch gekennzeichnet, dass** die Statorsegmente (10) kreisförmig um eine Rotationsachse (6) gebogen sind, dass die Bewegungsrichtung (x) des Läufers (2) tangential zur Rotationsachse (6) verläuft und dass die Richtung (y) vom Stator (1) zum Läufer (2) radial zur Rotationsachse (6) verläuft.

10. Elektrische Maschine nach einem der obigen Ansprüche, **dadurch gekennzeichnet, dass** sie als Generator einer Windkraftanlage verwendet wird.

## Claims

1. Electric machine
- wherein the electric machine has a stator (1) and a rotor (2),
- wherein the rotor (2) is movable relative to the stator (1) in a direction of movement (x),
- wherein when viewed in the direction of movement (x) of the rotor (2), the stator (1) is divided into stator segments (10) adjoining one another,
- wherein the stator segments (10) each have a central region (11), a first transition region (12) and a second transition region (13),
- wherein when viewed in the direction of movement (x) of the rotor (2), the central regions (11) are arranged between the first transition region (12) and the second transition region (13) of the respective stator segment (10),
- wherein the stator segments (10) each have a stator yoke (14) on the side facing away from the rotor (2) which extends over the respective central region (11) and the respective first transition region (12),
- wherein starting from the stator yokes (14), central groove webs (16) in the respective central region (11) and first transition webs (17) in the respective first transition region (12) extend towards the rotor (2),
- wherein when viewed in the direction towards the rotor (2), the first transition webs (17) end beneath the central groove webs (16),
- wherein the central groove webs (16) and the first transition webs (17) in each case form grooves which, when viewed from the stator yoke (14), are open towards the rotor (2) and, when viewed in the direction of movement (x) of the rotor (2), are delimited laterally in each case by two central groove webs (16), by two first transition webs (17) or by the central groove web (16) adjoining the first transition region (12) and the first transition web (17) adjoining the central region (11),
- wherein on their side facing away from the rotor (2) the stator segments (10) each have a transverse web (18) in the respective second transition region (13),
- wherein starting from the respective transverse web (18), respective second transition webs (19) extend towards the rotor (2) in the respective second transition region (13),
- wherein the second transition webs (19) in each case form grooves which, when viewed from the stator yoke (14), are open towards the rotor (2) and, when viewed in the direction of movement (x) of the rotor (2), are delimited laterally in each case by two second transition webs (19),
- wherein when viewed in the direction towards the rotor (2), the second transition webs (19) end at the same height as the central groove webs (16),
- wherein when viewed in the direction towards the rotor (2), lower edges (15) of the stator yokes (14) have a yoke spacing (a1) from the rotor (2),
- wherein when viewed in the direction towards the rotor (2), a spacing (a3) of the first transition webs (17) from the rotor (2) is at least as great as a spacing (a5) of a lower edge (20) of the transverse webs (18) facing away from the rotor (2) and
- wherein when viewed in the direction of movement (x) of the rotor (2), the first transition region (12) and the second transition region (13) of stator segments (10) immediately adjoining one another overlap one another and are arranged one above the other when viewed from the stator (1) towards the rotor (2).

2. Electric machine according to claim 1, **characterised in that** when viewed in the direction of movement (x) of the rotor (2), the stator segments (10) are embodied in one piece.

3. Electric machine according to claim 1, **characterised**
- **in that** when viewed in the direction of movement (x) of the rotor (2), the stator segments (10) each have a first stator segment part (23) and a second stator segment part (24),
- that the respective first stator segment part (23) comprises the central region (11) and the first transition region (12) of the respective stator segment (10),
- that the respective second stator segment part (24) comprises the second transition region (13) of the respective stator segment (10) and
- that the respective first stator segment part (23) and the respective second stator segment part (24) are connected to one another.

4. Electric machine according to claim 3, **characterised in that** the respective first stator segment part (23) and the respective second stator segment part (24) are connected to one another by means of a tongue-and-groove connection.

5. Electric machine according to one of the above claims, **characterised**
- **in that** one of two winding halves (22) of a first winding (21) and one of two winding halves (22) of a second winding (21) are arranged in each case between two central groove webs (16),
- **in that** the other winding half (22) of the first winding (21) is arranged between two central groove webs (16), between the central groove web (16) adjoining the first transition region (12) of the respective stator segment (10) and the first transition web (17) adjoining the central region (11) of the respective stator segment (10) or between two first transition webs (17) of the respective stator segment (10),
- **in that** the other winding half (22) of the second winding (21) is arranged between two central groove webs (16), between the central groove web (16) adjoining the second transition region (13) of the respective stator segment (10) and the second transition web (19) adjoining the central region (11) of the respective stator segment (10) or between two second transition webs (19) of the respective stator segment (10),
- **in that** exclusively the other winding half (22) of a first winding (21) but no winding half (22) of a second winding (21) is arranged in each case between two first transition webs (17) and
- **in that** exclusively the other winding half (22) of a second winding (21) but no winding half (22) of a first winding (21) is arranged in each case between two second transition webs (19).

6. Electric machine according to claim 5, **characterised in that** the first windings (21) are constructed the same as one another.

7. Electric machine according to claim 5 or 6, **characterised in that** the second windings (21) are constructed the same as one another.

8. Electric machine according to claim 5, **characterised in that** all the windings (21) are constructed the same.

9. Electric machine according to one of the above claims, **characterised in that** the stator segments (10) are curved in circular fashion about an axis of rotation (6), **in that** the direction of movement (x) of the rotor (2) runs tangentially with respect to the axis of rotation (6) and **in that** the direction (y) from the stator (1) to the rotor (2) runs radially with respect to the axis of rotation (6).

10. Electric machine according to one of the above claims, **characterised in that** it is used as a generator in a wind turbine.

## Revendications

1. Machine électrique,
- la machine électrique ayant un stator (1) et un rotor ( 2 ),
- le rotor ( 2 ) pouvant se déplacer dans un sens ( x ) de déplacement par rapport au stator ( 1 ),
- dans laquelle le stator ( 1 ) est, considéré dans le sens ( x ) de déplacement du rotor ( 2 ), subdivisé en segments ( 10 ) de stator voisins les uns des autres,
- dans laquelle les segments ( 10 ) de stator ont respectivement une partie ( 11 ) médiane, une première partie ( 12 ) de transition et une deuxième partie ( 13 ) de transition,
- dans laquelle les parties ( 11 ) médianes sont, considéré dans le sens ( x ) de déplacement du rotor ( 2 ), disposées entre la première partie ( 12 ) de transition et la deuxième partie ( 13 ) de transition du segment ( 10 ) de stator respectif,
- dans laquelle les segments ( 10 ) de stator ont, de leur côté éloigné du rotor ( 2 ), respectivement une culasse ( 14 ) de stator, qui s'étend sur la partie ( 11 ) médiane respective et la première partie ( 12 ) de transition respective,
- dans laquelle s'étendent, sur le rotor ( 2 ), à partir des culasses ( 14 ) de stator, dans la partie ( 11 ) médiane respective, des barrettes ( 16 ) médianes à encoches et, dans la première partie ( 12 ) de transition respective, de premières barrettes ( 17 ) de transition,
- dans laquelle les premières barrettes ( 17 ) de transition se terminent, dans le sens vers le rotor ( 2 ), en dessous des barrettes ( 16 ) médianes à encoches,
- dans laquelle les barrettes ( 16 ) médianes à encoches et les première barrettes ( 17 ) de transition forment respectivement des encoches, qui, considéré depuis la culasse ( 14 ) du stator, sont ouvertes vers le rotor ( 2 ) et qui, considéré dans le sens ( x ) de déplacement du rotor ( 2 ), sont délimitées respectivement par deux barrettes ( 16 ) médianes à encoches, par deux barrettes ( 17 ) de transition ou par la barrettes ( 16 ) médiane à encoches voisine de la première partie ( 12 ) de transition et par la première barrette ( 17 ) de transition voisine de la partie ( 11 ) médiane,
- dans laquelle les segments ( 10 ) de stator ont, de leur côté éloigné du rotor ( 2 ) dans la deuxième partie ( 13 ) de transition respective, respectivement une barrette ( 18 ) transversale,
- dans laquelle, à partir de la barrette ( 18 ) transversale respective, respectivement des deuxièmes barrettes ( 19 ) de transition s'étendent sur le rotor ( 2 ) dans la deuxième partie ( 13 ) de transition respective,
- dans laquelle les deuxièmes barrettes ( 19 ) de transition forment respectivement des encoches, qui, considéré depuis la culasse ( 14 ) du stator, sont ouvertes sur le rotor ( 2 ) et, considéré dans le sens ( x ) de déplacement du rotor ( 2 ), sont délimitées respectivement par deux barrettes ( 19 ) de transition,
- dans laquelle les deuxièmes barrettes ( 19 ) de transition se terminent, considéré dans le sens vers le rotor ( 2 ), au même niveau que les barrettes ( 16 ) médianes à encoches,
- dans laquelle des bords ( 15 ) inférieurs, considéré dans le sens allant vers le rotor ( 2 ), des culasses ( 14 ) du stator sont à une distance ( a1 ) de culasse du rotor ( 2 ),
- dans laquelle une distance ( a3 ), considéré dans le sens allant vers le rotor ( 2 ), des premières barrettes ( 17 ) de transition au rotor ( 2 ) est au moins aussi grande qu'une distance ( a5 ) d'un bord ( 20 ) inférieur éloigné du rotor ( 2 ) des barrettes ( 18 ) transversales et
- dans laquelle la première partie ( 12 ) de transition et la deuxième partie ( 13 ) de transition chevauchent, considéré dans la direction ( x ) de déplacement du rotor ( 2 ), des segments ( 10 ) de stator directement voisins l'un de l'autre et sont disposées l'une au-dessus de l'autre du stator ( 1 ) au rotor ( 2 ).

2. Machine électrique suivant la revendication 1, **caractérisée en ce que** les segments ( 10 ) de stator sont en une seule pièce, considéré dans le sens ( x ) de déplacement du rotor ( 2 ) .

3. Machine électrique suivant la revendication 1, **caractérisée**
- **en ce que** les segments ( 10 ) de stator ont, considéré dans le sens ( x ) de déplacement du rotor ( 2 ), respectivement une première partie ( 23 ) de segment de stator et une deuxième partie ( 24 ) de segment de stator,
- **en ce que** la première partie ( 23 ) de segment de stator comprend la partie ( 11 ) médiane et la première partie ( 12 ) de transition du segment ( 10 ) de stator,
- **en ce que** la deuxième partie ( 24 ) de segment de stator comprend la deuxième partie ( 13 ) de transition du segment ( 10 ) de stator et
- **en ce que** la première partie ( 23 ) de segment de stator et la deuxième partie ( 24 ) de segment de stator sont reliées l'une à l'autre.

4. Machine électrique suivant la revendication 3, **caractérisée en ce que** la première partie ( 23 ) de segment de stator et la deuxième partie ( 24 ) de segment de stator sont reliées l'une à l'autre au moyen d'une liaison par rainures et languettes.

5. Machine électrique suivant l'une des revendications précédentes, **caractérisée**
- **en ce que**, entre respectivement deux barrettes ( 16 ) à encoches, sont disposées l'une de deux moitiés ( 22 ) d'un premier enroulement ( 21 ) et l'une de deux moitiés ( 22 ) d'un deuxième enroulement ( 21 ),
- **en ce que** l'autre moitié ( 22 ) du premier enroulement ( 21 ) est disposée entre deux barrettes ( 16 ) médianes à encoches entre la barrette ( 16 ) médiane à encoches voisine de la première partie ( 12 ) de transition du segment ( 10 ) de stator respectif et la première barrette ( 17 ) de transition voisine de la partie ( 11 ) médiane du segment ( 10 ) de stator respectif ou entre deux premières barrettes ( 17 ) de transition du segment ( 10 ) de stator respectif,
- **en ce que** l'autre moitié ( 22 ) du deuxième enroulement ( 21 ) est disposée entre deux barrettes ( 16 ) médianes à encoches entre la barrette ( 16 ) médiane à encoches voisine de la deuxième partie ( 13 ) de transition du segment ( 10 ) de stator respectif et la deuxième barrette ( 19 ) de transition voisine de la partie ( 11 ) médiane du segment ( 10 ) de stator respectif ou entre deux deuxièmes barrettes ( 19 ) de transition du segment ( 10 ) de stator respectif,
- **en ce que**, entre deux premières barrettes ( 17 ) de transition, est disposée exclusivement l'autre moitié ( 22 ) d'un premier enroulement ( 21 ), mais pas de moitié ( 22 ) d'un deuxième enroulement ( 21 ) et
- **en ce que**, entre deux deuxièmes barrettes ( 19 ) de transition, est disposée exclusivement l'autre moitié ( 22 ) d'un deuxième enroulement ( 21 ), mais pas de moitié ( 22 ) d'un premier enroulement ( 21 ).

6. Machine électrique suivant la revendication 5, **caractérisée en ce que** les premiers enroulements ( 21 ) sont constitués pareillement.

7. Machine électrique suivant la revendication 5 ou 6, **caractérisée en ce que** les deuxièmes enroulements ( 21 ) sont constitués pareillement.

8. Machine électrique suivant la revendication 5, **caractérisée en ce que** tous les enroulements ( 21 ) sont constitués pareillement.

9. Machine électrique suivant l'une des revendications précédentes, **caractérisée en ce que** les segments ( 10 ) de stator sont courbés en forme de cercles autour d'un axe ( 6 ) de révolution, **en ce que** le sens ( x ) de déplacement du rotor ( 2 ) est tangent à l'axe ( 6 ) de révolution et **en ce que** le sens ( y ) du stator ( 1 ) au rotor ( 2 ) s'étend radialement par rapport à l'axe ( 6 ) de révolution.

10. Machine électrique suivant l'une des revendications précédentes, **caractérisée en ce qu'**elle est utilisée comme génératrice d'une éolienne.
